# EUROPEAN PATENT SPECIFICATION

(11) **EP 3 647 123 B1**
(45) Date of publication and mention of the grant of the patent: **28.04.2021**
(21) Application number: 19205521.8
(22) Date of filing: 26.10.2019
(51) Int. Cl.: B60R 9/06

(54) **SECURING DEVICE FOR CONNECTING A BICYCLE CARRY RACK TO A VEHICLE**
SICHERUNGSVORRICHTUNG ZUM VERBINDEN EINES FAHRRADTRÄGERS MIT EINEM FAHRZEUG
DISPOSITIF DE FIXATION POUR CONNECTER UNE CRÉMAILLÈRE DE SUPPORT DE BICYCLETTE À UN VÉHICULE

(30) Priority: 30.10.2018 TW 107138428
(43) Date of publication of application: 06.05.2020
(73) Proprietor: King Rack Industrial Co., Ltd., Taichung City (TW)
(72) Inventor: Wang, Chiu-Kuei, Taichung City (TW)
(74) Representative: Cabinet Chaillot

(56) References cited:
- EP-A1- 0 943 495
- DE-A1-102014 014 812
- DE-B3-102005 026 273
- US-A1- 2005 205 629

## Description

### BACKGROUND OF THE INVENTION

### 1. Fields of the invention

The present invention relates to an assistance wrench for securing a bicycle carry rack to a vehicle hitch.

### 2. Descriptions of Related Art

The conventional securing devices for securing a bicycle carry rack to a vehicle hitch generally include a reception portion which includes multiple clamping plates which are controlled by a bolt and a nut. The reception portion is removably mounted to a vehicle hitch so as to connect a bicycle carry rack to the vehicle.

The bolt and the nut are located outside of the reception portion and operated by a wrench or a hand tool. However, the wrench or the hand tool have to be carried by the users and this becomes a problem and an extra burden for the users.

The present invention is intended to provide an assistance wrench for securing a bicycle carry rack to a vehicle hitch, and the assistance wrench is installed to the securing device, so that the uses do not need to carry any wrench or hand tool.

German patent DE 10 2014 014812 A1 discloses a bicycle carry rack securing device as defined in the preamble of claim 1.

### SUMMARY OF THE INVENTION

The object of the present invention is to provide an assistance wrench connected to the securing device so that the users do not need to prepare a wrench or a hand tool to operate the securing device.

The present invention relates to a bicycle carry rack securing device and comprises a reception portion and a connection portion. The reception portion is mounted to a vehicle hitch, and the connection portion is connected to the reception portion and connected with a bicycle carry rack. The reception portion includes a clamping unit extending therefrom. The clamping unit has an adjustable portion and a hole defined through the clamping unit. A T-shaped adjustment member is connected to the adjustable portion.

A fastener extends through the hole of the clamping unit and is connected with a washer and a nut. The nut is threadedly connected to the fastener to secure or release the clamping unit.

An assistance wrench is connected to the clamping unit and includes a driving portion, an accommodation portion and a lever. The driving portion is located in the accommodation portion and detachably mounted to the nut. The lever extends from the accommodation portion. A recovery unit is partially received in the accommodation portion and includes a collar, a spring and a tubular member. The spring is biased between the collar and the tubular member to maintain the assistance wrench to be mounted to the nut.

The uses operates the lever of the assistance wrench to fasten or loosen the nut relative to the fastener. When the users operate the assistance wrench to a position where the driving portion of the assistance wrench is disengaged from the nut, and releases the lever, the recovery unit automatically mounts the driving portion to the nut. Besides, the users do not need to prepare a wrench or a hand tool to operate the securing device.

The adjustment member is a T-shaped member, and may include an installation portion, a fixed portion and a movable portion. The fixed portion extends from the installation portion, and the installation portion includes rails along which the movable portion moves. The gap that the clamping unit is able to clamp can be adjusted by the fixed portion and the movable portion so as to prevent from overly clamping.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the securing device of the present invention;
Fig. 2 is an exploded view of the securing device of the present invention;
Fig. 3 is a side view of the securing device of the present invention;
Fig. 4 is a top view of the securing device of the present invention;
Fig. 5 shows that the driving portion of the assistance wrench is mounted to the nut;
Fig. 6 shows that the driving portion of the assistance wrench is disengaged from the nut, and
Fig. 7 shows that the recovery unit returns the driving portion of the assistance wrench to be mounted to the nut.

### DETAILED DESCRIPTION OF THE PREFERRED EMBODIMENT

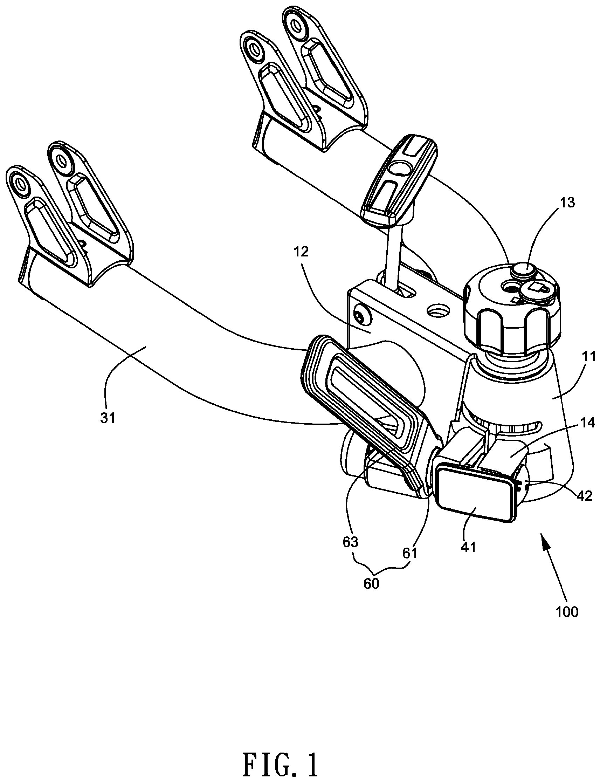

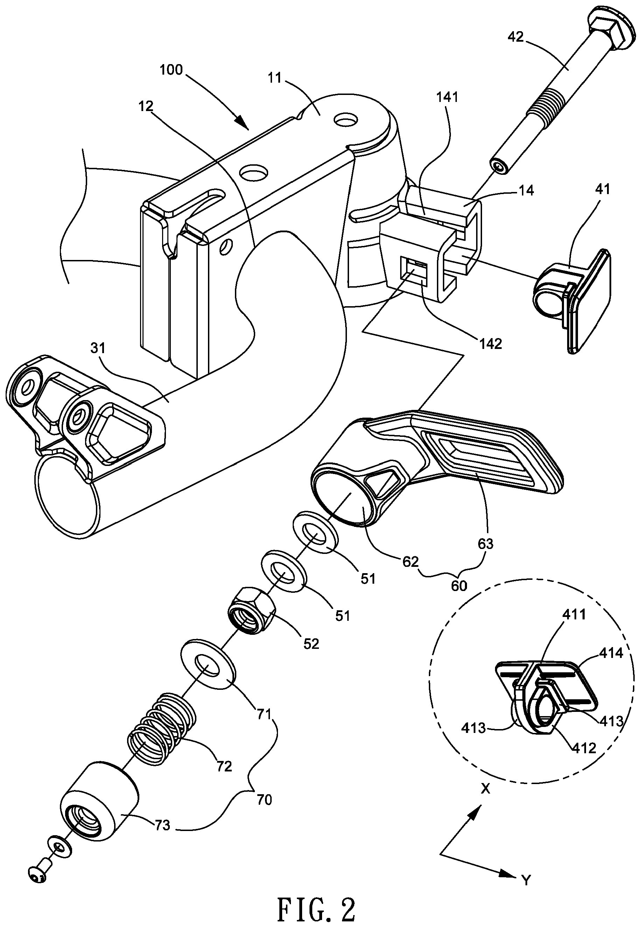

Referring to Figs. 1 and 2, the bicycle carry rack securing device 100 of the present invention comprises a reception portion 11 and a connection portion 12. The reception portion 11 is mounted to a vehicle hitch 21, and the connection portion 12 is connected to the reception portion 11 and located away from the vehicle and connected with a bicycle carry rack. The reception portion 11 and the vehicle hitch 21 mentioned here are disclosed in Taiwanese patents 1527721 or 1339168. By operating the operation member 13 on the top of the reception portion 11, the reception portion 11 is controlled to clamp the vehicle hitch 21 tightly or to release the vehicle hitch 21.

The reception portion 11 includes an imagination X axis and a Y axis. A clamping unit 14 extends from the reception portion 11 along the Y axis, and the clamping unit 14 has an adjustable portion 141 and two holes 142 are defined through the clamping unit 14. The axis of each hole 142 is parallel to the X axis. A fastener 42 extends through the holes 142 of the clamping unit 14 along the X axis and is connected with a washer 51 and a nut 52. The nut 52 is threadedly connected to the fastener 42 to secure or release the clamping unit 14. The nut 52 is driven by an assistance wrench 60. The assistance wrench 60 is connected to the clamping unit 14 and includes a driving portion 61, an accommodation portion 62 and a lever 63. The driving portion 61 is located in the accommodation portion 62 and detachably mounted to the nut 52. The lever 63 extends from the accommodation portion 62 so as to operate the assistance wrench 60. A recovery unit 70 is partially received in the accommodation portion 62 and includes a collar 71, a spring 72 and a tubular member 73. The spring 72 is biased between the collar 71 and the tubular member 73 to maintain the assistance wrench 60 to be mounted to the nut 52 normally.

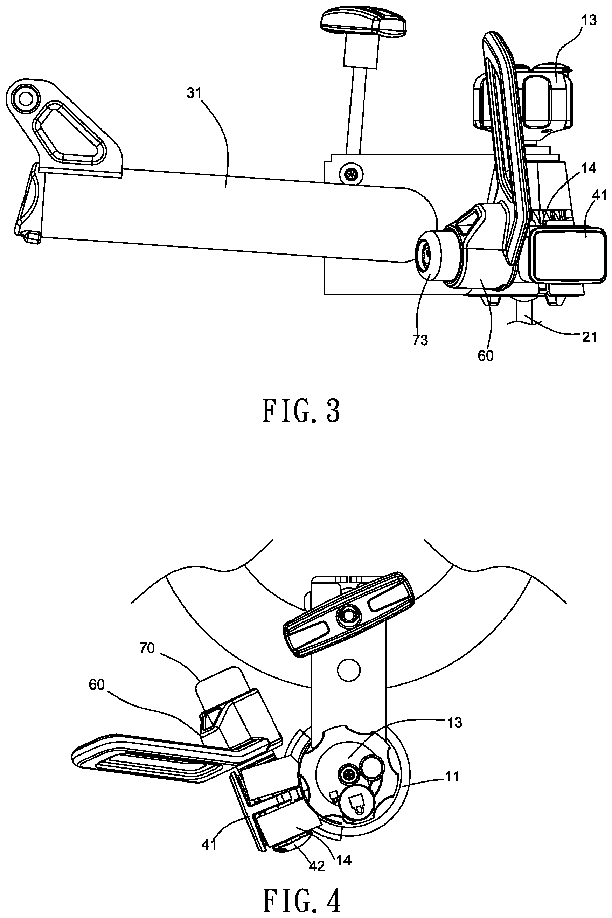

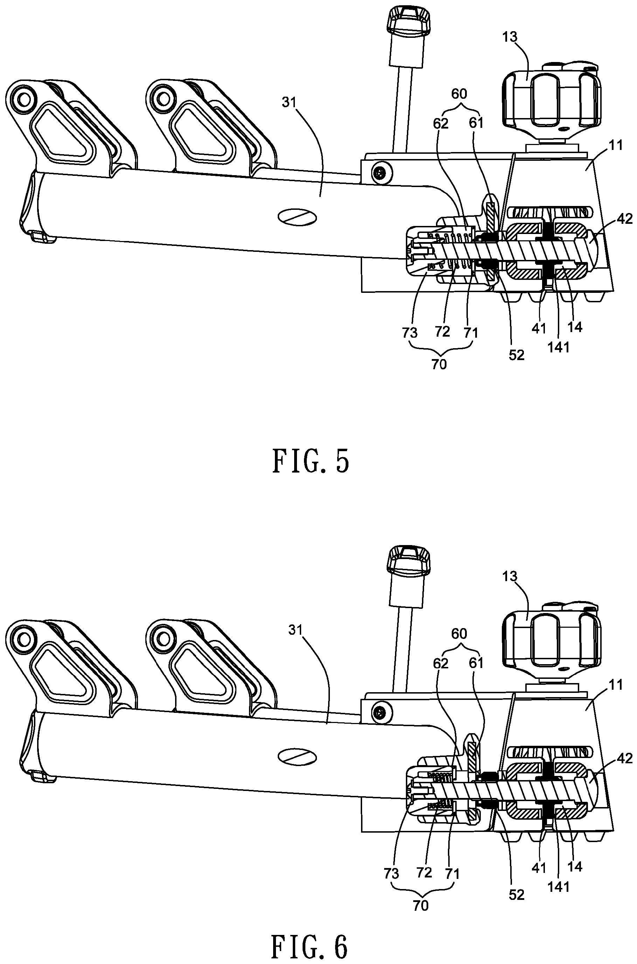

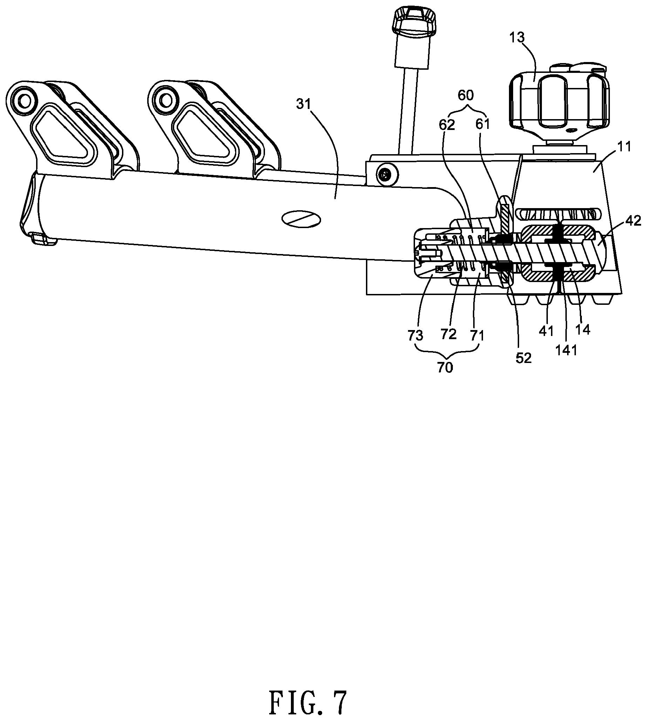

As shown in Figs. 3 to 7, when the reception portion 11 is mounted to the vehicle hitch 21 by operation of the operation member 13, the users hold the lever 63 and rotate the assistance wrench 60 to rotate the nut 52 by the driving portion 61. When the users operate the assistance wrench 60 to a position where the driving portion 61 of the assistance wrench 60 is disengaged from the nut 52, and releases the lever 63, the recovery unit 70 automatically mounts the driving portion 61 to the nut 52 again. Therefore, the nut 52 can be operated again.

Besides, the recovery unit 70 includes a screw which extends through the tubular member 73 and is connected to the fastener 42 to restrict the assistance wrench 60 from being separated from the clamping unit 14. Therefore, the users do not need to prepare a wrench or a hand tool to operate the securing device.

In order to prevent the users to overly tighten the nut 52 to deform the clamping unit 14, the adjustment member 41 is a T-shaped member and connected to the adjustable portion 141 in the X axis. The T-shaped adjustment member 41 includes an installation portion 411, a fixed portion 412 and a movable portion 413. The fixed portion 412 extends from the installation portion 411. The installation portion 411 includes rails 414 along which the movable portion 413 moves. The gap that the clamping unit 14 clamps is adjusted by the fixed portion 412 and the movable portion 413.

In one embodiment, not being part of the claimed invention, the recovery unit 70 is omitted. The reception portion 11 includes a clamping unit 14 extending therefrom, the clamping unit 14 has a nut 52, and an assistance wrench 60 mounted to the nut 52 and fastens the nut 52 to secure the reception portion 11.

While we have shown and described the embodiment in accordance with the present invention, it should be clear to those skilled in the art that further embodiments may be made without departing from the scope of the present invention.

## Claims

1. A bicycle carry rack securing device (100) comprising:
a reception portion (11) and a connection portion (12), the reception portion (11) adapted to be mounted to a vehicle hitch (21), the connection portion (12) connected to the reception portion (11) and adapted to be connected with a bicycle carry rack, the reception portion (11) including a clamping unit (14) extending therefrom, the clamping unit (14) having an adjustable portion (141) and a hole (142) defined through the clamping unit (14);
a fastener (42) extending through the hole (142) of the clamping unit (14) and connected with a washer and a nut (52), the nut (52) being threadedly connected to the fastener (42) to secure or release the clamping unit (14);
**characterized in that** it further comprises:
a T-shaped adjustment member (41) connected to the adjustable portion (141); and
an assistance wrench (60) connected to the clamping unit (14) and including a driving portion (61), an accommodation portion (62) and a lever (63), the driving portion (61) located in the accommodation portion (62) and detachably mounted to the nut (52), the lever (63) extending from the accommodation portion (62), a recovery unit (70) partially received in the accommodation portion (62) and including a collar (71), a spring (72) and a tubular member (73), the spring (72) biased between the collar (71) and the tubular member (73) to maintain the assistance wrench (60) to be mounted to the nut (52).

2. The bicycle carry rack securing device (100) as claimed in claim 1, wherein the T-shaped adjustment member (41) includes an installation portion (411), a fixed portion (412) and a movable portion (413), the fixed portion (412) extends from the installation portion (411), the installation portion (411) includes rails (414) along which the movable portion (413) moves, a gap that the clamping unit (14) clamps is adjusted by the fixed portion (412) and the movable portion (413).

3. The bicycle carry rack securing device (100) as claimed in claim 1, wherein the recovery unit (70) includes a screw which extends through the tubular member (73) and is connected to the fastener (42) to restrict the assistance wrench (60) from being separated from the clamping unit (14).

## Patentansprüche

1. Fahrradträger-Sicherungsvorrichtung (100), Folgendes umfassend:
einen Aufnahmeabschnitt (11) und einen Verbindungsabschnitt (12), wobei der Aufnahmeabschnitt (11) dafür eingerichtet ist, an eine FahrzeugAnhängerkupplung (21) montiert zu werden, der Verbindungsabschnitt (12) mit dem Aufnahmeabschnitt (11) verbunden und dafür eingerichtet ist, mit einem Fahrradträger verbunden zu werden, der Aufnahmeabschnitt (11) eine Klemmeinheit (14) beinhaltet, die sich davon erstreckt, wobei die Klemmeinheit (14) einen justierbaren Abschnitt (141) und eine durch die Klemmeinheit (14) hindurch definierte Öffnung (142) umfasst,
ein Befestigungselement (42), das sich durch die Öffnung (142) der Klemmeinheit (14) erstreckt und mit einer Unterlegscheibe und einer Mutter (52) verbunden ist, wobei die Mutter (52) mittels Gewinde mit dem Befestigungselement (42) verbunden ist, um die Klemmeinheit (14) zu sichern oder freizugeben,
**dadurch gekennzeichnet, dass** sie ferner Folgendes umfasst:
ein T-förmiges Justierelement (41), das mit dem justierbaren Abschnitt (141) verbunden ist, und
einen Hilfsschlüssel (60), der mit der Klemmeinheit (14) verbunden ist und einen Antriebsabschnitt (61), einen Unterbringungsabschnitt (62) und einen Hebel (63) beinhaltet, wobei sich der Antriebsabschnitt (61) in dem Unterbringungsabschnitt (62) befindet und lösbar an die Mutter (52) montiert ist, sich der Hebel (63) von dem Unterbringungsabschnitt (62) aus erstreckt, eine Rückstelleinheit (70), die teilweise in dem Unterbringungsabschnitt (62) aufgenommen ist und eine Manschette (71), eine Feder (72) und ein röhrenförmiges Element (73) beinhaltet, wobei die Feder (72) zwischen der Manschette (71) und dem röhrenförmigen Element (73) vorgespannt ist, um den Hilfsschlüssel (60) an die Mutter (52) montiert zu halten.

2. Fahrradträger-Sicherungsvorrichtung (100) nach Anspruch 1, wobei das T-förmige Justierelement (41) einen Installationsabschnitt (411), einen feststehenden Abschnitt (412) und einen beweglichen Abschnitt (413) beinhaltet, wobei sich der feststehende Abschnitt (412) von dem Installationsabschnitt (411) aus erstreckt, der Installationsabschnitt (411) Schienen (414) beinhaltet, entlang welcher sich der bewegliche Abschnitt (413) bewegt, durch den feststehenden Abschnitt (412) und den beweglichen Abschnitt (413) ein Spalt justiert wird, den die Klemmeinheit (14) einklemmt.

3. Fahrradträger-Sicherungsvorrichtung (100) nach Anspruch 1, wobei die Rückstelleinheit (70) eine Schraube beinhaltet, die sich durch das röhrenförmige Element (73) erstreckt und mit dem Befestigungselement (42) verbunden ist, um zu beschränken, dass der Hilfsschlüssel (60) von der Klemmeinheit (14) getrennt wird.

## Revendications

1. Dispositif de fixation de porte-bicyclette (100) comprenant :
une partie de réception (11) et une partie de liaison (12), la partie de réception (11) étant apte à être montée sur une boule d'attelage de véhicule (21), la partie de liaison (12) étant reliée à la partie de réception (11) et apte à être reliée à un porte-bicyclette, la partie de réception (11) comprenant une unité de serrage (14) s'étendant à partir de celle-ci, l'unité de serrage (14) ayant une partie réglable (141) et un trou (142) défini à travers l'unité de serrage (14) ;
un organe de fixation (42) s'étendant à travers le trou (142) de l'unité de serrage (14) et relié à une rondelle et un écrou (52), l'écrou (52) étant vissé sur l'organe de fixation (42) pour fixer ou libérer l'unité de serrage (14) ;
**caractérisé par le fait qu'**il comprend en outre :
un élément de réglage en forme de T (41) relié à la partie réglable (141) ; et
une clé d'assistance (60) reliée à l'unité de serrage (14) et comprenant une partie d'entraînement (61), une partie de logement (62) et un levier (63), la partie d'entraînement (61) étant située dans la partie de logement (62) et montée de manière détachable sur l'écrou (52), le levier (63) s'étendant à partir de la partie de logement (62), une unité de récupération (70) étant partiellement reçue dans la partie de logement (62) et comprenant un collier (71), un ressort (72) et un élément tubulaire (73), le ressort (72) étant sollicité entre le collier (71) et l'élément tubulaire (73) pour maintenir la clé d'assistance (60) à monter sur l'écrou (52).

2. Dispositif de fixation de porte-bicyclette (100) selon la revendication 1, dans lequel l'élément de réglage en forme de T (41) comprend une partie d'installation (411), une partie fixe (412) et une partie mobile (413), la partie fixe (412) s'étendant à partir de la partie d'installation (411), la partie d'installation (411) comprenant des rails (414) le long desquels la partie mobile (413) se déplace, un intervalle que l'unité de serrage (14) serre étant réglé par la partie fixe (412) et la partie mobile (413).

3. Dispositif de fixation de porte-bicyclette (100) selon la revendication 1, dans lequel l'unité de récupération (70) comprend une vis qui s'étend à travers l'élément tubulaire (73) et est reliée à l'organe de fixation (42) pour empêcher la clé d'assistance (60) d'être séparée de l'unité de serrage (14).
